# EUROPÄISCHE PATENTSCHRIFT

(11) **EP 3 727 959 B1**
(45) Veröffentlichungstag und Bekanntmachung des Hinweises auf die Patenterteilung: **08.12.2021**
(21) Anmeldenummer: 18786736.1
(22) Anmeldetag: 11.10.2018
(51) Int. Cl.: B60S 1/34, B60S 1/52

(54) **WISCHARMVORRICHTUNG**
WIPER ARM DEVICE
DISPOSITIF DE BRAS D'ESSUIE-GLACE

(30) Priorität: 21.12.2017 DE 102017223527
(43) Veröffentlichungstag der Anmeldung: 28.10.2020
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2018/077707
(87) Internationale Veröffentlichungsnummer: WO 2019/120673

(56) Entgegenhaltungen:
- EP-A1- 2 813 402
- FR-A1- 2 758 781
- FR-A2- 2 547 548
- GB-A- 2 121 681
- GB-A- 2 331 231

## Beschreibung

### Stand der Technik

Es ist bereits eine Wischarmvorrichtung mit einer an einem Wischarm angeordneten Zusatzdüseneinheit vorgeschlagen worden. Weiterer Stand der Technik ist aus der FR 2 758 781 A1, der GB 2 331 231 A und der FR 5 47 548 A2 bekannt.

### Offenbarung der Erfindung

Die Erfindung geht aus von einer Wischarmvorrichtung mit zumindest einer an wenigstens einem Wischarm anordenbaren Schlauchhalteeinheit, welche zumindest eine Schlauchführung umfasst, die zu einer Führung wenigstens eines Waschwasserschlauchs vorgesehen ist, mit zumindest einer Zusatzdüseneinheit und mit zumindest einer Koppeleinheit, welche dazu vorgesehen ist, die Zusatzdüseneinheit mit der Schlauchhalteeinheit zu koppeln und zur Kopplung zumindest ein erstes Koppelelement und zumindest ein korrespondierendes zweites Koppelelement umfasst.

Es wird vorgeschlagen, dass das erste Koppelelement zumindest teilweise von der Schlauchführung ausgebildet ist.

Durch die erfindungsgemäße Ausgestaltung der Wischarmvorrichtung kann vorteilhaft eine Vorrichtung mit verbesserten Eigenschaften bezüglich einer Montage bereitgestellt werden. Besonders vorteilhaft kann eine Kopplung der Zusatzdüseneinheit unter Vermeidung zusätzlicher Bauteile erzielt werden. Ferner kann insbesondere eine Nachrüstbarkeit bzw. eine Anpassbarkeit bestehender Wischersysteme verbessert werden. Ganz besonders vorteilhaft kann ein Scheibenwischer besonders flexibel mit einer beliebigen Anzahl an Zusatzdüseneinheiten zur Ausbildung einer Düsenkette ausgestattet werden. Auch kann insbesondere eine Zusatzdüseneinheit in einem beliebigen Bereich entlang der Schlauchhalteeinheit angeordnet werden, um derart spezifische Positionen des Wischers mit Waschwasser zu versorgen.

Unter einer "Wischarmvorrichtung" soll insbesondere eine Vorrichtung für einen Wischarm verstanden werden und/oder eine Vorrichtung, welche einen Wischarm zumindest teilweise, vorzugsweise zumindest zu einem Großteil ausbildet. Alternativ kann die Wischarmvorrichtung den Wischarm auch vollständig ausbilden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Schlauchhalteeinheit" soll insbesondere eine Einheit verstanden werden, welche dazu vorgesehen ist, einen Schlauch verliersicher, insbesondere an den Wischarm, anzubinden. Vorzugsweise verläuft der Waschwasserschlauch zumindest teilweise, vorzugsweise zumindest zu einem Großteil und besonders bevorzugt vollständig, parallel zu einer Haupterstreckungsrichtung der Schlauchhalteeinheit und/oder eines Wischarms. Insbesondere zu einer Verbindung mit dem Wischarm weist die Schlauchhalteeinheit zumindest ein Befestigungselement auf. Vorzugsweise ist der Wischarm zumindest im Wesentlichen parallel zu einer Haupterstreckungsrichtung des Befestigungselements in dieses einführbar, insbesondere einschiebbar. Alternativ oder zusätzlich ist das Befestigungselement auf den Wischarm aufklipsbar, insbesondere einrastbar, und zwar vorzugsweise zumindest im Wesentlichen senkrecht zu einer Haupterstreckungsrichtung des Wischarms. Unter dem Ausdruck "zumindest zu einem Großteil" sollen dabei insbesondere zumindest zu 55 %, vorzugsweise zumindest zu 65 %, bevorzugt zumindest zu 75 %, besonders bevorzugt zumindest zu 85 % und ganz besonders bevorzugt zumindest zu 95 % verstanden werden. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter "zumindest im Wesentlichen senkrecht" soll insbesondere eine Ausrichtung einer Richtung relativ zu einer Bezugsrichtung verstanden werden, wobei die Richtung und die Bezugsrichtung, insbesondere in einer Ebene betrachtet, einen Winkel von 90° einschließen, wobei der Winkel insbesondere eine maximale Abweichung von insbesondere kleiner als 8°, vorteilhaft kleiner als 5° und besonders vorteilhaft kleiner als 2°, aufweist. Unter "zumindest im Wesentlichen parallel" soll insbesondere eine Ausrichtung einer Richtung relativ zu einer Bezugsrichtung verstanden werden, wobei die Richtung und die Bezugsrichtung, insbesondere in einer Ebene betrachtet, einen Winkel von 0° einschließen, wobei der Winkel insbesondere eine maximale Abweichung von insbesondere kleiner als 8°, vorteilhaft kleiner als 5° und besonders vorteilhaft kleiner als 2°, aufweist. Unter einem "Waschwasserschlauch" soll insbesondere ein rohrförmiges Element verstanden werden, das dazu vorgesehen ist, Waschwasser zu leiten. Bevorzugt ist der Waschwasserschlauch flexibel und/oder elastisch ausgebildet. Der Waschwasserschlauch ist insbesondere zumindest teilweise, vorzugsweise zumindest zu einem Großteil, von der Schlauchführung umgriffen. Besonders bevorzugt ist das Befestigungselement zumindest teilweise einstückig mit der Schlauchführung verbunden. Unter einer "Zusatzdüseneinheit" soll insbesondere eine Düseneinheit verstanden werden, welche zusätzlich zu zumindest einer Hauptdüseneinheit vorgesehen ist. Vorzugsweise ist die Zusatzdüseneinheit zur Aufbringung von Waschwasser auf eine Wischfläche in einem Bereich eines Innenkreises und/oder eines Außenkreises eines Wischers vorgesehen. Unter einer "Düseneinheit" soll in diesem Zusammenhang insbesondere eine Einheit verstanden werden, die zumindest ein Düsenelement umfasst. Bevorzugt umfasst die Düseneinheit zumindest zwei Düsenelemente. Insbesondere ist die Zusatzdüseneinheit als eine Mehrstrahldüseneinheit ausgebildet. Unter einer "Mehrstrahldüseneinheit" soll insbesondere eine Düseneinheit verstanden werden, welche mehr als ein Düsenelement und vorzugsweise eine Vielzahl an Düsenelementen aufweist. Die Düsenelemente können insbesondere in einer Reihe, insbesondere entlang der Haupterstreckungsrichtung der Schlauchhalteeinheit, angeordnet sein. Vorzugsweise sind die Düsenelemente fächerartig angeordnet. Unter einem "Düsenelement" soll insbesondere ein Element verstanden werden, das dazu vorgesehen ist, Waschwasser auszubringen, beziehungsweise in eine bestimmte Richtung zu sprühen. Insbesondere weist das Düsenelement zumindest eine Düsenöffnung auf, die ein Waschwassersystem zu einer Umgebung hin öffnet. Das Düsenelement kann aus einem Metall und/oder besonders vorteilhaft aus einem Kunststoff hergestellt sein. Bevorzugt ist das Düsenelement dazu vorgesehen, mit dem Waschwasserschlauch gekoppelt zu werden. Insbesondere bildet die Zusatzdüseneinheit zumindest teilweise zusammen mit der Hauptdüseneinheit und/oder weiteren Zusatzdüseneinheiten eine Düsenkette aus. Unter einer "Koppeleinheit" soll insbesondere eine Einheit verstanden werden, welche zu einer wiederholten und insbesondere werkzeugfreien Kopplung von zumindest zwei getrennten Bauteilen vorgesehen ist. Insbesondere ist die Koppeleinheit zu einer kraft- und/oder formschlüssigen Koppelung vorgesehen. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Insbesondere ist zumindest das erste Koppelelement zumindest teilweise, vorzugsweise zumindest zu einem Großteil und besonders bevorzugt vollständig, aus einem flexiblen Material ausgebildet. Alternativ oder zusätzlich kann die Koppeleinheit auch zu einer stoffschlüssigen Verbindung vorgesehen sein. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Insbesondere bildet die Schlauchführung zumindest zu einem Großteil und besonders bevorzugt vollständig das erste Koppelelement aus. Ganz besonders bevorzugt ist das erste Koppelelement mit der Schlauchführung identisch.

Ferner wird vorgeschlagen, dass die Zusatzdüseneinheit zumindest einen Schlauchverbinder zur Anbindung der Zusatzdüseneinheit an einen Waschwasserschlauch aufweist, welcher zumindest teilweise das zweite Koppelelement ausbildet. Hierdurch kann auf zusätzliche Bauteile zur Ausbildung der Koppeleinheit verzichtet werden. Insbesondere kann so eine Montage weiter vereinfacht werden. Insbesondere ist zumindest eine Außenwandung der Schlauchverbindung korrespondierend zu einer Innenwandung der Schlauchführung ausgebildet. Der Schlauchverbinder bildet insbesondere zumindest zu einem Großteil und besonders bevorzugt vollständig das zweite Koppelelement aus. Ganz besonders bevorzugt ist das zweite Koppelelement mit dem Schlauchverbinder identisch. Der Schlauchverbinder ist insbesondere zu einer fluidtechnischen Anbindung der Zusatzdüseneinheit vorgesehen. Der Schlauchverbinder umfasst insbesondere zumindest einen insbesondere konischen Schlauchanschlussstutzen. Vorzugsweise weist der Schlauchverbinder zumindest zwei insbesondere einander gegenüberliegende Schlauchanschlussstutzen auf, welche insbesondere zumindest im Wesentlichen identisch zueinander sind. Insbesondere soll unter "zumindest im Wesentlichen identisch" vorzugsweise bis auf Herstellungs- und/oder Montagetoleranzen identisch verstanden werden. Der Schlauchverbinder ist insbesondere zu einer kraft- und/oder formschlüssigen Verbindung des Waschwasserschlauchs mit der Zusatzdüseneinheit vorgesehen. Insbesondere mittels zweier Schlauchanschlussstutzen ist es möglich, mehrere in Reihe geschaltete Zusatzdüseneinheiten insbesondere im Bereich des Innenkreises anzuordnen.

Ferner wird vorgeschlagen, dass in einem gekoppelten Zustand zumindest das erste Koppelelement zumindest das zweite Koppelelement zumindest teilweise und vorzugsweise zumindest zu einem Großteil umgreift. Hierdurch kann eine Verliersicherung der Kopplung verbessert werden. Insbesondere umgreift das erste Koppelelement das zweite Koppelelement zumindest um einen Umfangswinkel von mehr als 180°, vorzugsweise von mehr als 200°, besonders bevorzugt von mehr als 220° und ganz besonders bevorzugt von mehr als 240°. Vorzugsweise weist das erste Koppelelement zumindest einen C-förmigen Querschnitt auf.

Zudem wird vorgeschlagen, dass zu einer Kopplung das erste Koppelelement und das zweite Koppelelement entlang einer Haupterstreckungsrichtung der Schlauchhalteeinheit ineinander einschiebbar sind. Hierdurch kann eine Montage weiter vereinfacht werden. Ferner kann vorteilhaft eine beliebige Positionierung der Zusatzdüseneinheit entlang der Schlauchhalteeinheit erfolgen. Insbesondere ist das zweite Koppelelement zumindest teilweise in das erste Koppelelement einschiebbar.

Ferner wird vorgeschlagen, dass zu einer Kopplung das erste Koppelelement und das zweite Koppelelement quer zu einer Haupterstreckungsrichtung der Schlauchhalteeinheit ineinander eindrückbar sind. Hierdurch kann eine Montage weiter vereinfacht werden. Insbesondere ist das zweite Koppelelement in das erste Koppelelement einklipsbar. Besonders vorteilhaft sind das erste Koppelelement und das zweite Koppelelement miteinander verrastbar.

Nach der Erfindung wird vorgeschlagen, dass die Wischarmvorrichtung zumindest eine Verdrehsicherungseinheit umfasst, welche zumindest ein Verdrehsicherungselement aufweist, das dazu vorgesehen ist, ein Verdrehen der Zusatzdüseneinheit relativ zur Schlauchhalteeinheit zu verhindern. Hierdurch kann vermieden werden, dass die Zusatzdüseneinheit durch ein Verdrehen Waschwasser in einer nicht vorgesehenen Richtung abgibt. Vorteilhaft kann eine Betriebssicherheit verbessert werden. Besonders bevorzugt wird vorgeschlagen, dass das Verdrehsicherungselement dazu vorgesehen ist, sich an einer Wischarmstange abzustützen. Insbesondere weist das Verdrehsicherungselement zumindest einen insbesondere L-förmigen Endabschnitt auf, welcher sich in einem montierten Zustand an dem Wischarm abstützt.

Nach der Erfindung wird vorgeschlagen, dass das erste Koppelelement drehfest in dem Verdrehsicherungselement angeordnet ist. Hierduch kann eine Stabilität der Verdrehsicherung verbessert werden. Vorteilhaft kann eine Betriebssicherheit weiter verbessert werden. Insbesondere bilden das Verdrehsicherungselement und das zweite Koppelelement gemeinsam eine Koppelaufnahme, in welcher das erste Koppelelement kraft- und/oder formschlüssig anordenbar ist.

Um eine besonders kompakte und vorzugsweise stabile Bauweise zu erzielen, wird vorgeschlagen, dass die Verdrehsicherungseinheit zumindest teilweise einstückig mit der Koppeleinheit verbunden ist. Insbesondere ist das Verdrehsicherungselement einstückig mit dem zweiten Koppelelement verbunden.

Des Weiteren wird vorgeschlagen, dass die Schlauchhalteeinheit zumindest ein Befestigungselement, insbesondere das zuvor genannte Befestigungselement, aufweist, welches dazu vorgesehen ist, die Schlauchhalteeinheit an dem Wischarm zu befestigen und welches einstückig mit der Schlauchführung verbunden ist. Insbesondere weist das Befestigungselement einen zumindest C-förmigen Querschnitt auf.

Ferner wird ein Verfahren zur Montage der Wischarmvorrichtung vorgeschlagen, wobei in zumindest einem Verfahrensschritt mit zumindest der Koppeleinheit die Zusatzdüseneinheit mit der Schlauchhalteeinheit mittels zumindest des ersten Koppelelements und zumindest des korrespondierenden zweiten Koppelelements gekoppelt wird, wobei das erste Koppelelement zumindest teilweise von einer Schlauchführung der Schlauchhalteeinheit ausgebildet ist.

Die erfindungsgemäße Wischarmvorrichtung soll hierbei nicht auf die oben beschriebene Anwendung und Ausführungsform beschränkt sein. Insbesondere kann die erfindungsgemäße Wischarmvorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Wischer mit einer Wischarmvorrichtung in einer schematischen Draufsicht,
- Fig. 2: einen Teil der Wischarmvorrichtung mit einer Zusatzdüseneinheit in einer Schnittansicht,
- Fig. 3: die Zusatzdüseneinheit in einer perspektivischen Darstellung,
- Fig. 4: die Zusatzdüseneinheit mit einem montierten Waschwasserschlauch in einer perspektivischen Darstellung und
- Fig. 5: einen schematischen Ablaufplan eines Verfahrens zur Montage der Wischarmvorrichtung.

### Beschreibung des Ausführungsbeispiels

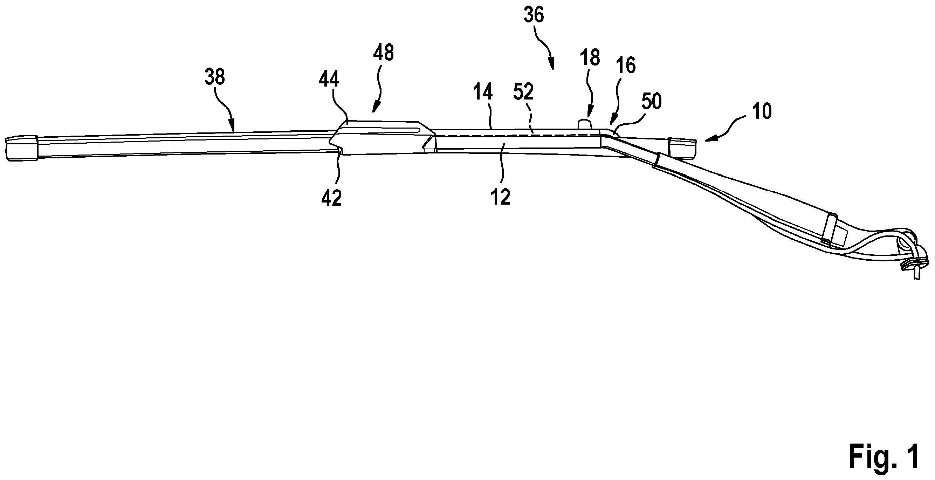

Figur 1 zeigt einen beispielhaft als ein Scheibenwischer ausgebildeten Wischer 36 in einer schematischen Draufsicht. Im vorliegenden Fall ist der Wischer 36 als ein Fahrzeugscheibenwischer, insbesondere als ein Kraftfahrzeugscheibenwischer, ausgebildet. Der Wischer 36 ist in einem montierten Zustand dargestellt. Der Wischer 36 ist zumindest in einem Reinigungsbetriebszustand dazu vorgesehen, eine Wischfläche von Nässe und/oder Verschmutzung zu reinigen. Im vorliegenden Fall ist die Wischfläche als eine Scheibe, insbesondere eine Fahrzeugscheibe, ausgebildet. Grundsätzlich ist auch denkbar, dass eine Scheibe als eine Fensterscheibe ausgebildet ist.

Des Weiteren weist der Wischer 36 einen Wischarm 10 auf. Der Wischarm 10 weist eine Haupterstreckungsrichtung auf. In einem montierten Zustand des Wischarms 10 ist eine Haupterstreckungsrichtung des Wischarms 10 zumindest im Wesentlichen parallel zu einer Reinigungsfläche.

Der Wischer 36 umfasst ein Wischblatt 38. Das Wischblatt 38 bildet in dem montierten Zustand einen Formschluss mit der Wischfläche. Das Wischblatt 38 weist eine Haupterstreckung auf. Die Haupterstreckung des Wischblatts 38 ist zumindest im Wesentlichen parallel zur Wischfläche. Ferner ist die Haupterstreckung des Wischblatts 38 zumindest im Wesentlichen parallel zu einer Haupterstreckung des Wischarms 10. Das Wischblatt 38 ist zumindest in dem Reinigungsbetriebszustand dazu vorgesehen, Nässe und/oder Verschmutzung von der Wischfläche zu ziehen.

Ferner umfasst der Wischer 36 einen Wischblattadapter 42. Der Wischblattadapter 42 weist einen Kontaktbereich zu dem Wischblatt 38 auf. Der Wischblattadapter 42 ist zu einer Verbindung des Wischblatts 38 an dem Wischarm 10 vorgesehen.

Der Wischer 36 weist zumindest eine Hauptdüseneinheit 48 auf. Die Hauptdüseneinheit 48 ist zu einer Aufbringung von Waschwasser auf die Wischfläche vorgesehen. Die Hauptdüseneinheit 48 ist zu einer Ausbringung des Waschwassers in einem Zentralbereich des Wischblatts 38 vorgesehen. Die Hauptdüseneinheit 48 ist im Bereich des Wischblattadapters 42 angeordnet. Die Hauptdüseneinheit 48 weist zumindest ein Düsenelement auf (nicht dargestellt). Im vorliegenden Fall ist die Hauptdüseneinheit 48 als eine Mehrstrahldüseneinheit ausgebildet, welche mehrere Düsenelemente umfasst. Dabei können die Düsenelemente in einer Reihe angeordnet sein. Im vorliegenden Fall sind die Düsenelemente fächerartig angeordnet.

Die Wischarmvorrichtung umfasst einen Waschwasserschlauch 16. Der Waschwasserschlauch 16 ist zu einer Versorgung zumindest der Hauptdüseneinheit 48 mit Waschwasser vorgesehen. Der Waschwasserschlauch 16 ist mit einem Waschwasserspeicher fluidtechnisch verbunden. Der Waschwasserschlauch 16 ist entlang dem Wischarm 10 verlegt. Der Waschwasserschlauch 16 verläuft im Wesentlichen parallel zu der Haupterstreckungsrichtung des Wischarms 10.

Der Waschwasserschlauch 16 ist im vorliegenden Fall zumindest zweiteilig ausgebildet. Der Waschwasserschlauch 16 umfasst zumindest einen ersten Waschwasserschlauchteil 50. Ferner umfasst der Waschwasserschlauch 16 zumindest einen zweiten Waschwasserschlauchteil 52. Alternativ könnte der Waschwasserschlauch 16 mehrere Waschwasserschlauchteile aufweisen, und zwar insbesondere abhängig von einer Anzahl von mit Waschwasser zu versorgenden Düseneinheiten.

Das erste Waschwasserschlauchteil 50 ist fluidtechnisch mit dem Waschwasserspeicher verbunden. Das zweite Waschwasserschlauchteil 52 ist fluidtechnisch mit dem ersten Waschwasserschlauchteil 50 verbunden. Das zweite Waschwasserschlauchteil 52 ist zumindest mittelbar mit dem ersten Waschwasserschlauchteil 50 verbunden. Das zweite Waschwasserschlauchteil 52 ist fluidtechnisch mit der Hauptdüseneinheit 48 verbunden. Das zweite Waschwasserschlauchteil 52 ist unmittelbar mit der Hauptdüseneinheit 48 verbunden.

Der Wischer 36 weist eine Wischarmvorrichtung auf. Im vorliegenden Fall ist die Wischarmvorrichtung als eine Scheibenwischarmvorrichtung ausgebildet, und zwar insbesondere als eine Fahrzeugscheibenwischarmvorrichtung und vorzugsweise als eine Kraftfahrzeugscheibenwischarmvorrichtung.

Die Wischarmvorrichtung umfasst einen Wischarmadapter 44. Der Wischarmadapter 44 ist zu einer lösbaren Verbindung des Wischblatts 38 an dem Wischarm 10 vorgesehen. Der Wischarmadapter 44 ist dazu vorgesehen, den Wischarm 10 mit dem Wischblattadapter 42 lösbar zu verbinden. Der Wischarmadapter 44 ist dazu vorgesehen, den Wischarm 10 mittels des Wischblattadapters 42 lösbar mit dem Wischblatt 38 zu verbinden. Der Wischblattadapter 42 ist dazu vorgesehen, das Wischblatt 38 mittels des Wischarmadapters 44 lösbar mit dem Wischarm 10 zu verbinden. Der Wischarmadapter 44 ist im vorliegenden Fall einteilig ausgebildet. Alternativ könnte ein Wischarmadapter mehrteilig ausgebildet sein. Ferner könnte ein Wischarmadapter zu einer permanenten Verbindung eines Wischblatts an einem Wischarm vorgesehen sein.

Die Wischarmvorrichtung umfasst eine Schlauchhalteeinheit 12. Die Schlauchhalteeinheit 12 ist dazu vorgesehen, den Waschwasserschlauch 16 an dem Wischarm 10 anzuordnen. Die Schlauchhalteeinheit 12 befestigt den Waschwasserschlauch 16 verliersicher mit dem Wischarm 10. In einem angeordneten Zustand des Waschwasserschlauchs 16 verläuft dieser zumindest teilweise parallel zu einer Haupterstreckungsrichtung der Schlauchhalteeinheit 12.

Die Schlauchhalteeinheit 12 weist im vorliegenden Fall über eine gesamte Längserstreckung der Schlauchhalteeinheit 12 ein gleichbleibendes Profil auf. Die Schlauchhalteeinheit 12 ist dazu vorgesehen, bei einer Montage auf den Wischarm 10 befestigt, insbesondere aufgeklipst, zu werden. Im vorliegenden Fall ist die Schlauchhalteeinheit 12 einstückig ausgebildet. Ferner ist die Schlauchhalteeinheit 12 zumindest teilweise aus einem flexiblen Material ausgebildet. Die Schlauchhalteeinheit 12 besteht zumindest teilweise aus einem Kunststoff. Die Schlauchhalteeinheit 12 ist als ein Spritzguss- und/oder Extrusionsbauteil ausgebildet. Ferner ist denkbar, dass eine Schlauchhalteeinheit einstückig mit einem Wischarmadapter ausgebildet sein kann. Alternativ kann eine Schlauchhalteeinheit mehrteilig ausgebildet sein.

Die Schlauchhalteeinheit 12 weist zumindest ein Befestigungselement 34 auf. Das Befestigungselement 34 ist zu einer Befestigung an dem Wischarm 10 vorgesehen. Das Befestigungselement 34 ist zu einer lösbaren Befestigung der Schlauchhalteeinheit 12 an dem Wischarm 10 vorgesehen. Das Befestigungselement 34 ist dazu vorgesehen, den Wischarm 10 zumindest zu einem Großteil zu umgreifen. Im vorliegenden Fall wird das Befestigungselement 34 bei einer Montage auf den Wischarm 10 gesteckt, insbesondere geklipst. Alternativ könnte ein Befestigungselement zu einer permanenten Befestigung einer Fluidleiteinheit an einem Wischarm vorgesehen sein. Ferner könnte ein Befestigungselement bei einer Montage auf einen Wischarm geschoben werden.

Das Befestigungselement 34 weist entlang einer gesamten Haupterstreckung des Befestigungselements 34 ein gleichbleibendes Profil auf. Das Befestigungselement 34 weist zumindest ein U-förmiges Profil auf. Im vorliegenden Fall weist das Befestigungselement 34 zumindest ein C-förmiges Profil auf. Alternativ könnte eine Schlauchhalteeinheit mehrere Befestigungselemente aufweisen. Ferner könnte ein Befestigungselement lediglich über einen Teil einer Längserstreckung des Befestigungselements ein gleichbleibendes Profil aufweisen. Zudem könnte ein Befestigungselement ein O-förmiges Profil aufweisen.

Die Schlauchhalteeinheit 12 umfasst eine Schlauchführung 14. Die Schlauchführung 14 ist zu einer Führung des Waschwasserschlauchs 16 vorgesehen. Der Waschwasserschlauch 16 ist insbesondere zumindest teilweise, vorzugsweise zumindest zu einem Großteil von der Schlauchführung 14 umgriffen. Die Schlauchführung 14 ist einstückig mit dem Befestigungselement 34 verbunden. Eine Haupterstreckungsrichtung der Schlauchführung 14 ist parallel zu einer Haupterstreckungsrichtung des Befestigungselements 34 angeordnet. Die Schlauchführung 14 ist flexibel ausgebildet. Die Schlauchführung 14 weist entlang einer gesamten Haupterstreckung ein gleichbleibendes Profil auf. Die Schlauchführung 14 weist ein C-förmiges Profil auf. Die Schlauchführung 14 ist in dem montierten Zustand, an einer dem Wischarm 10 abgewandten Seite des Befestigungselements 34 angeordnet. Die Schlauchführung 14 ist in dem montierten Zustand an einer Windschattenseite des Befestigungselements 34 angeordnet. Die Schlauchführung 14 ist in dem montierten Zustand, in einer Profilansicht betrachtet, an einem Ende des Befestigungselements 34 angeordnet. Alternativ könnte eine Schlauchhalteeinheit 12 mehrere Schlauchführungen aufweisen. Ferner könnte eine Schlauchführung in einem montierten Zustand an einer einem Wischarm zugewandten Seite eines Befestigungselements angeordnet sein. Zudem könnte eine Schlauchführung in einem montierten Zustand an einer Windseite eines Befestigungselements angeordnet sein. Des Weiteren könnte eine Schlauchführung an einem Mittelabschnitt eines Befestigungselements angeordnet sein.

Ferner weist die Wischarmvorrichtung zumindest eine Zusatzdüseneinheit 18 auf. Die Zusatzdüseneinheit 18 ist zu einer Aufbringung von Waschwasser auf die Wischfläche vorgesehen. Die Zusatzdüseneinheit 18 ist zusätzlich zur Hauptdüseneinheit 48 zu einer Aufbringung von Waschwasser auf die Wischfläche vorgesehen. Die Zusatzdüseneinheit 18 ist zu einer Aufbringung von Waschwasser auf im Bereich eines Innenkreises des Wischblatts 38 vorgesehen. Die Zusatzdüseneinheit 18 ist im Bereich eines Innenkreises des Wischblatts 38 angeordnet. Alternativ könnte die Zusatzdüseneinheit auch an einer anderen Position angeordnet sein, wie beispielsweise im Bereich eines Außenkreises des Wischblatts. Ferner könnte die Wischarmvorrichtung weitere Zusatzdüseneinheiten aufweisen.

Die Zusatzdüseneinheit 18 ist einstückig ausgebildet. Die Zusatzdüseneinheit 18 besteht zumindest teilweise aus einem flexiblen Material. Ferner besteht die Zusatzdüseneinheit 18 zumindest teilweise aus einem Kunststoff. Die Zusatzdüseneinheit 18 ist als ein Spritzgussteil ausgebildet. Alternativ könnte eine Zusatzdüseneinheit als ein 3D-Druckteil ausgebildet sein.

Die Zusatzdüseneinheit 18 weist zumindest ein Düsenelement 54 auf. Im vorliegenden Fall weist die Zusatzdüseneinheit 18 mehrere Düsenelemente 54 auf. Der Übersichtlichkeit halber ist nur eines der Düsenelemente 54 mit einem Bezugszeichen versehen. Die Zusatzdüseneinheit 18 als eine Mehrstrahlendüseneinheit ausgebildet. Die Düsenelemente 54 könnten in einer Reihe angeordnet sein. Im vorliegenden Fall sind die Düsenelemente 54 fächerartig angeordnet. Die Zusatzdüseneinheit 18 weist zumindest eine Düsenhalterung 62 auf. Zumindest das Düsenelement 54 ist innerhalb der Düsenhalterung 62 angeordnet. Im vorliegenden Fall sind alle Düsenelemente 54 der Zusatzdüseneinheit 18 in der Düsenhalterung 62 angeordnet.

Die Zusatzdüseneinheit 18 und die Hauptdüseneinheit 48 bilden zusammen zumindest teilweise eine Düsenkette aus. Im vorliegenden Fall bilden die Zusatzdüseneinheit 18 und die Hauptdüseneinheit 48 vollständig eine Düsenkette aus. Die Zusatzdüseneinheit 18 und die Hauptdüseneinheit 48 sind in Reihe verbunden. Der Waschwasserschlauch 16 verbindet die Zusatzdüseneinheit 18 und die Hauptdüseneinheit 48 in Reihe. Ferner könnte die Wischarmvorrichtung weitere Zusatzdüseneinheiten aufweisen, welche ebenfalls in Reihe geschaltet sind und zumindest teilweise eine Düsenkette ausbilden.

Die Zusatzdüseneinheit 18 weist zur Verbindung mit dem Waschwasserschlauch 16 zumindest einen Schlauchverbinder 26 auf. Der Schlauchverbinder 26 ist zu einer kraft- und/oder formschlüssigen Verbindung des Waschwasserschlauchs 16 mit der Zusatzdüseneinheit 18 vorgesehen. Der Schlauchverbinder 26 umfasst zumindest einen ersten Schlauchanschlussstutzen 56. Der erste Schlauchanschlussstutzen 56 ist konisch ausgebildet. Der Waschwasserschlauch 16 ist bei einer Montage auf den ersten Schlauchanschlussstutzen 56 aufschiebbar. Im vorliegenden Fall weist der Schlauchverbinder 26 einen zweiten Schlauchanschlussstutzen 58 auf. Der weitere Schlauchanschlussstutzen 58 ist im Wesentlichen identisch zum ersten Schlauchanschlussstutzen 56 ausgebildet. Der zweite Schlauchanschlussstutzen 58 liegt dem ersten Schlauchanschlussstutzen 56 gegenüber. Bei einer Montage ist das zweite Waschwasserschlauchteil 52 auf den zweiten Schlauchanschlussstutzen 58 aufschiebbar. In einem montierten Zustand ist der erste Schlauchanschlussstutzen 56 mit dem ersten Waschwasserschlauchteil 50 fluidtechnisch, insbesondere unmittelbar, verbunden. In einem montierten Zustand ist der zweite Schlauchanschlussstutzen 58 mit dem zweiten Waschwasserschlauchteil 52 fluidtechnisch, insbesondere unmittelbar, verbunden. Der Schlauchverbinder 26 ist zumindest teilweise einstückig mit weiteren Komponenten der Zusatzdüseneinheit 18 verbunden. Der Schlauchverbinder 26 ist einstückig mit der Düsenhalterung 62 verbunden.

Ferner umfasst der Schlauchverbinder 26 einen Verbindungskanal 60. Der Verbindungskanal 60 verbindet den ersten Schlauchanschlussstutzen 56 fluidtechnisch mit dem zweiten Schlauchanschlussstutzen 58. Ferner verbindet der Verbindungskanal 60 den ersten Schlauchanschlussstutzen 56 fluidtechnisch zumindest mit den Düsenelement 54. Ferner verbindet der Verbindungskanal 60 den zweiten Schlauchanschlussstutzen 58 fluidtechnisch zumindest mit den Düsenelement 54. Ferner verbindet der Verbindungskanal 60 die Düsenelemente 54 fluidtechnisch untereinander. Der Verbindungskanal 60 ist rohrförmig ausgebildet.

Zu einer Montage weist die Zusatzdüseneinheit 18 zumindest einen Griff 64 auf. Der Griff 64 ist einstückig mit weiteren Komponenten der Zusatzdüseneinheit 18 verbunden. Der Griff 64 ist einstückig mit dem Schlauchverbinder 26 verbunden. Ferner ist der Griff 64 einstückig mit der Düsenhalterung 62 verbunden. Der Griff 64 weist eine Grifffläche 66 auf. Der Griff 64 ist einstückig mit dem Schlauchverbinder 26 verbunden. Ferner ist der Griff 64 einstückig mit der Düsenhalterung 62 verbunden. Alternativ oder zusätzlich, insbesondere anstelle des Griffs 64, kann eine Zusatzdüseneinheit 18 einen Spoiler umfassen. Denkbar ist, dass ein Griff 64 und ein Spoiler von einem identischen Bauteil gebildet sind.

Ferner weist die Zusatzdüseneinheit 18 zumindest ein Stützelement 68 auf. Das Stützelement 68 stützt die Zusatzdüseneinheit 18 auf dem Wischarm 10 ab. Das Stützelement 68 weist dazu einen L-förmigen Endabschnitt auf. Das Stützelement 68 ist einstückig mit weiteren Komponenten der Zusatzdüseneinheit 18 verbunden. Das Stützelement 68 ist insbesondere einstückig mit dem Schlauchverbinder 26 verbunden. Das Stützelement 68 ist einstückig mit der Düsenhalterung 62 verbunden.

Die Wischarmvorrichtung umfasst zumindest eine Koppeleinheit 20. Die Koppeleinheit 20 ist dazu vorgesehen, die Schlauchhalteeinheit 12 zumindest kraft- und/oder formschlüssig mit der Zusatzdüseneinheit 18 zu koppeln. Die Koppeleinheit 20 ist zu einer werkzeugfreien Kopplung vorgesehen.

Die Koppeleinheit 20 weist zumindest ein erstes Koppelelement 22 auf. Das erste Koppelelement 22 ist einstückig mit der Schlauchhalteeinheit 12 ausgebildet. Das erste Koppelelement 22 ist zumindest teilweise von der Schlauchführung 14 gebildet. Im vorliegenden Fall ist das erste Koppelelement 22 vollständig von der Schlauchführung 14 ausgebildet. Das erste Koppelelement 22 ist mit der Schlauchführung 14 identisch.

Die Koppeleinheit 20 weist zumindest ein zweites Koppelelement 24 auf. Das zweite Koppelelement 24 ist korrespondierend zu dem ersten Koppelelement 22 ausgebildet. Das zweite Koppelelement 24 ist einstückig mit der Zusatzdüseneinheit 18 ausgebildet. Das zweite Koppelelement 24 ist zumindest teilweise von dem Schlauchverbinder 26 ausgebildet. Im vorliegenden Fall ist das zweite Koppelelement 24 vollständig von dem Schlauchverbinder 26 ausgebildet. Das zweite Koppelelement 24 ist mit dem Schlauchverbinder 26 identisch.

In einem gekoppelten Zustand umgreifen sich das erste Koppelelement 22 und zumindest das zweite Koppelelement 24 zumindest teilweise. Im vorliegenden Fall umgreift das erste Koppelelement 22 das zweite Koppelelement 24. Das erste Koppelelement 22 umgreift das zweite Koppelelement 24 zumindest um einen Umfangswinkel von mehr als 180°. Im vorliegenden Fall umgreift das erste Koppelelement 22 das zweite Koppelelement 24 sogar um einen Umfangswinkel von mehr als 240°.

Das erste Koppelelement 22 und das zweite Koppelelement 24 sind ineinander einschiebbar. Das erste Koppelelement 22 und das zweite Koppelelement 24 sind entlang einer Haupterstreckungsrichtung der Schlauchhalteeinheit 12 ineinander einschiebbar. Im vorliegenden Fall ist das zweite Koppelelement 24 in das erste Koppelelement 22 einschiebbar.

Alternativ oder zusätzlich sind das erste Koppelelement 22 und das zweite Koppelelement 24 ineinander eindrückbar. Im vorliegenden Fall sind das erste Koppelelement 22 und das zweite Koppelelement 24 aufgrund der flexiblen Ausgestaltung des ersten Koppelelements 22 ineinander eindrückbar. Ferner ist im vorliegenden Fall das zweite Koppelelement 24 in das erste Koppelelement 22 eindrückbar.

Das erste Koppelelement 22 und das zweite Koppelelement 24 sind miteinander verrastbar. Im vorliegenden Fall ist das zweite Koppelelement 24 in das erste Koppelelement 22 einrastbar.

Ferner weist die Wischarmvorrichtung zumindest eine Verdrehsicherungseinheit 30 auf. Die Verdrehsicherungseinheit 30 umfasst zumindest ein Verdrehsicherungselement 32. In einem gekoppelten Zustand der Zusatzdüseneinheit 18 und der Schlauchhalteeinheit 12 verhindert das Verdrehsicherungselement 32 ein Verdrehen dieser zueinander. Das Verdrehsicherungselement 32 verhindert ein Verdrehen der Schlauchhalteeinheit 12 und der Zusatzdüseneinheit 18 um eine Drehachse, welche zumindest im Wesentlichen parallel zu einer Haupterstreckung der Schlauchführung 14 verläuft.

Ferner wird vorgeschlagen, dass das Verdrehsicherungselement 32 dazu vorgesehen ist, sich an dem Wischarm 10 abzustützen. Insbesondere weist das Verdrehsicherungselement 32 zumindest einen, insbesondere L-förmigen Endabschnitt auf, welcher in einem montierten Zustand sich an dem Wischarm 10 abstützt. Im vorliegenden Fall ist das Verdrehsicherungselement 32 zumindest teilweise von dem Stützelement 68 ausgebildet. Das Verdrehsicherungselement 32 weist ein U-förmiges Profil auf. Das Profil des Verdrehsicherungselements 32 ist korrespondierend zu einer Form des ersten Koppelelements 22 ausgebildet. In einem gekoppelten Zustand ist das erste Koppelelement 22 durch einen Formschluss mit dem Verdrehsicherungselement 32 gegen ein Verdrehen gesichert. Die Verdrehsicherungseinheit 30 ist zumindest teilweise einstückig mit der Koppeleinheit 20 verbunden ist. Das Verdrehsicherungselement 32 ist einstückig mit dem zweiten Koppelelement 24 verbunden.

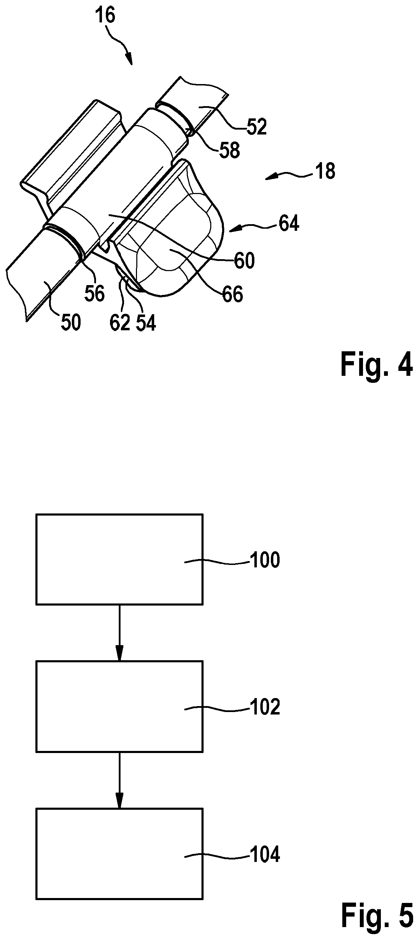

Figur 5 zeigt einen schematischen Ablaufplan eines Verfahrens zur Montage der Wischarmvorrichtung. Ein äquivalentes Verfahren zur Demontage der Wischarmvorrichtung könnte in umgekehrter Reihenfolge der Verfahrensschritte des Verfahrens zur Montage durchführbar sein.

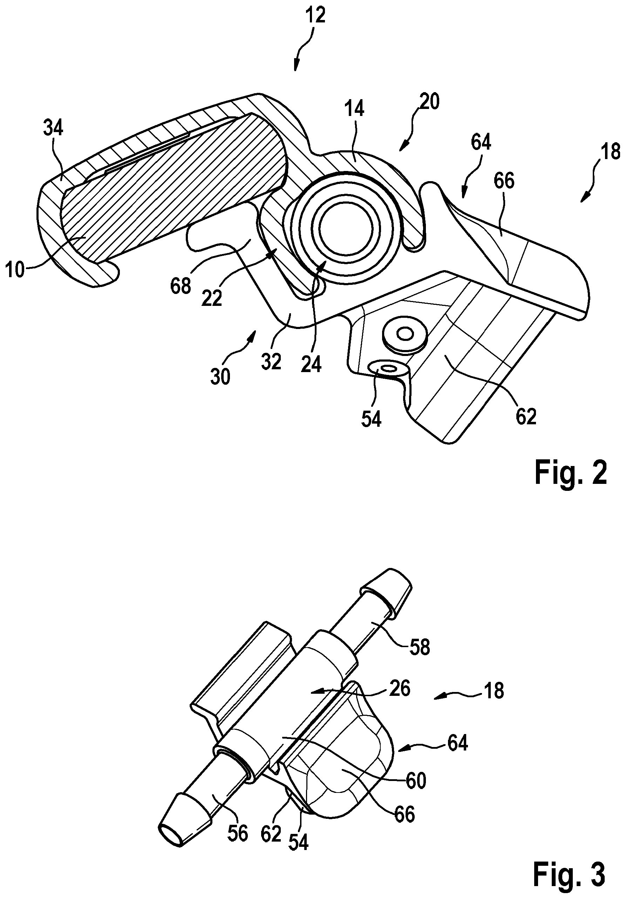

Das Verfahren umfasst einen Verfahrensschritt 100. In dem Verfahrensschritt 100 wird die Schlauchhalteeinheit 12 an dem Wischarm 10 befestigt. Die Schlauchhalteeinheit 12 wird mittels des Befestigungselements 34 befestigt. Das Befestigungselement 34 wird auf den Wischarm 10 geklipst und/oder aufgeschoben (vgl. Figur 2).

Das Verfahren umfasst zumindest einen weiteren Verfahrensschritt 102 in dem weiteren Verfahrensschritt 102 wird. Die Zusatzdüseneinheit 18 mit der Schlauchhalteeinheit 12 gekoppelt. Das erste Koppelelement 22 und das zweite Koppelelement 24 werden ineinander geschoben und/oder ineinander geklipst (vgl. Figur 2).

Das Verfahren umfasst zumindest einen weiteren Verfahrensschritt 104. In dem weiteren Verfahrensschritt 104 wird der Waschwasserschlauch 16 mit der Zusatzdüseneinheit 18 verbunden. Der Waschwasserschlauch 16 wird mit dem Schlauchverbinder 26 verbunden. Das erste Waschwasserschlauchteil 50 wird mit dem ersten Schlauchanschlussstutzen 56 verbunden. Das erste Waschwasserschlauchteil 50 wird auf den ersten Schlauchanschlussstutzen 56 geschoben. Das zweite Waschwasserschlauchteil 52 wird mit dem zweiten Schlauchanschlussstutzen 58 verbunden. Das zweite Waschwasserschlauchteil 52 wird auf den zweiten Schlauchanschlussstutzen 58 geschoben (vgl. Figur 4).

## Patentansprüche

1. Wischarmvorrichtung, insbesondere Scheibenwischarmvorrichtung, mit zumindest einer an wenigstens einem Wischarm (10) anordenbaren Schlauchhalteeinheit (12), welche zumindest eine Schlauchführung (14) umfasst, die zu einer Führung wenigstens eines Waschwasserschlauchs (16) vorgesehen ist, mit zumindest einer Zusatzdüseneinheit (18) und mit zumindest einer Koppeleinheit (20), welche dazu vorgesehen ist, die Zusatzdüseneinheit (18) mit der Schlauchhalteeinheit (12) zu koppeln und zur Kopplung zumindest ein erstes Koppelelement (22) und zumindest ein korrespondierendes zweites Koppelelement (24) umfasst, wobei das erste Koppelelement (22) zumindest teilweise von der Schlauchführung (14) ausgebildet ist und zumindest eine Verdrehsicherungseinheit (30), welche zumindest ein Verdrehsicherungselement (32) aufweist, das dazu vorgesehen ist, ein Verdrehen der Zusatzdüseneinheit (18) relativ zur Schlauchhalteeinheit (12) zu verhindern, **dadurch gekennzeichnet, dass** in einem gekoppelten Zustand das erste Koppelelement (22) drehfest in dem Verdrehsicherungselement (32) angeordnet ist.

2. Wischarmvorrichtung nach Anspruch 1, **dadurch gekennzeichnet, dass** die Zusatzdüseneinheit (18) zumindest einen Schlauchverbinder (26) aufweist, welcher zumindest teilweise das zweite Koppelelement (24) ausbildet.

3. Wischarmvorrichtung nach Anspruch 1 oder 2, **dadurch gekennzeichnet, dass** in einem gekoppelten Zustand sich zumindest das erste Koppelelement (22) und zumindest das zweite Koppelelement (24) zumindest teilweise umgreifen.

4. Wischarmvorrichtung nach einem der vorhergehenden Ansprüche, **dadurch gekennzeichnet, dass** zu einer Kopplung das erste Koppelelement (22) und das zweite Koppelelement (24) entlang einer Haupterstreckungsrichtung der Schlauchhalteeinheit (12) zueinander verschiebbar sind.

5. Wischarmvorrichtung nach einem der vorhergehenden Ansprüche, **dadurch gekennzeichnet, dass** zu einer Kopplung das erste Koppelelement (22) und das zweite Koppelelement (22) quer zu einer Haupterstreckungsrichtung der Schlauchhalteeinheit (12) ineinander eindrückbar sind.

6. Wischarmvorrichtung nach Anspruch 1, **dadurch gekennzeichnet, dass** das Verdrehsicherungselement (32) sich in einem gekoppelten Zustand der Koppeleinheit (20) an dem Wischarm (10) abstützt.

7. Wischarmvorrichtung nach einem der Ansprüche 1 bis 6, **dadurch gekennzeichnet, dass** die Verdrehsicherungseinheit (30) zumindest teilweise einstückig mit der Koppeleinheit (20) verbunden ist.

8. Wischarmvorrichtung nach einem der vorhergehenden Ansprüche, **dadurch gekennzeichnet, dass** die Schlauchhalteeinheit (12) zumindest ein Befestigungselement (34) aufweist, welches dazu vorgesehen ist, die Schlauchhalteeinheit (12) an dem Wischarm (10) zu befestigen, und welches einstückig mit der Schlauchführung (14) verbunden ist.

9. Wischer (36), insbesondere Scheibenwischer, mit zumindest einer Wischarmvorrichtung nach einem der Ansprüche 1 bis 8.

## Claims

1. Wiper arm device, in particular windscreen wiper arm device, having at least one hose retention unit (12) which can be arranged on at least one wiper arm (10) and which comprises at least one hose guide (14) which is provided to guide at least one washing water hose (16), having at least one additional nozzle unit (18) and having at least one coupling unit (20) which is provided to couple the additional nozzle unit (18) to the hose retention unit (12) and which comprises at least a first coupling element (22) and at least a corresponding second coupling element (24) for coupling, wherein the first coupling element (22) is formed at least partially by the hose guide (14), and at least one rotation prevention unit (30) which has at least one rotation prevention element (32) which is provided to prevent a rotation of the additional nozzle unit (18) relative to the hose retention unit (12), **characterized in that,** in a coupled state, the first coupling element (22) is arranged in a rotationally fixed manner in the rotation prevention element (32) .

2. Wiper arm device according to Claim 1, **characterized in that** the additional nozzle unit (18) has at least one hose connector (26) which at least partially forms the second coupling element (24).

3. Wiper arm device according to Claim 1 or 2, **characterized in that,** in a coupled state, at least the first coupling element (22) and at least the second coupling element (24) at least partially engage around each other.

4. Wiper arm device according to one of the preceding claims, **characterized in that,** for coupling, the first coupling element (22) and the second coupling element (24) can be displaced with respect to each other in a main extent direction of the hose retention unit (12).

5. Wiper arm device according to one of the preceding claims, **characterized in that,** for coupling, the first coupling element (22) and the second coupling element (22) can be pushed one inside the other transversely relative to a main extent direction of the hose retention unit (12).

6. Wiper arm device according to Claim 1, **characterized in that** the rotation prevention element (32) is supported on the wiper arm (10) in a coupled state of the coupling unit (20).

7. Wiper arm device according to one of Claims 1 to 6, **characterized in that** the rotation prevention unit (30) is connected at least partially in an integral manner to the coupling unit (20).

8. Wiper arm device according to one of the preceding claims, **characterized in that** the hose retention unit (12) has at least one fastening element (34) which is provided to fasten the hose retention unit (12) to the wiper arm (10), and which is connected in an integral manner to the hose guide (14).

9. Wiper (36), in particular windscreen wiper, having at least one wiper arm device according to one of Claims 1 to 8.

## Revendications

1. Dispositif de bras d'essuyage, notamment dispositif de bras d'essuie-glace, muni d'au moins une unité de support de tuyau (12) qui peut être agencée sur au moins un bras d'essuyage (10), qui comporte au moins un guide de tuyau (14), qui est prévu pour guider au moins un tuyau d'eau de lavage (16), muni d'au moins une unité de buse supplémentaire (18) et muni d'au moins une unité d'accouplement (20), qui est prévue pour accoupler l'unité de buse supplémentaire (18) à l'unité de support de tuyau (12) et comporte pour l'accouplement au moins un premier élément d'accouplement (22) et au moins un deuxième élément d'accouplement correspondant (24), le premier élément d'accouplement (22) étant au moins partiellement formé par le guide de tuyau (14) et au moins une unité de blocage en rotation (30), qui comprend au moins un élément de blocage en rotation (32), qui est prévu pour empêcher une rotation de l'unité de buse supplémentaire (18) par rapport à l'unité de support de tuyau (12), **caractérisé en ce que,** dans un état accouplé, le premier élément d'accouplement (22) est agencé de manière immobile en rotation dans l'élément de blocage en rotation (32).

2. Dispositif de bras d'essuyage selon la revendication 1, **caractérisé en ce que** l'unité de buse supplémentaire (18) comprend au moins un connecteur de tuyau (26), qui forme au moins partiellement le deuxième élément d'accouplement (24).

3. Dispositif de bras d'essuyage selon la revendication 1 ou 2, **caractérisé en ce que,** dans un état accouplé, au moins le premier élément d'accouplement (22) et au moins le deuxième élément d'accouplement (24) s'entourent au moins partiellement.

4. Dispositif de bras d'essuyage selon l'une quelconque des revendications précédentes, **caractérisé en ce que,** pour un accouplement, le premier élément d'accouplement (22) et le deuxième élément d'accouplement (24) peuvent être déplacés l'un par rapport à l'autre le long d'une direction d'extension principale de l'unité de support de tuyau (12).

5. Dispositif de bras d'essuyage selon l'une quelconque des revendications précédentes, **caractérisé en ce que,** pour un accouplement, le premier élément d'accouplement (22) et le deuxième élément d'accouplement (22) peuvent être enfoncés l'un dans l'autre perpendiculairement à une direction d'extension principale de l'unité de support de tuyau (12).

6. Dispositif de bras d'essuyage selon la revendication 1, **caractérisé en ce que** l'élément de blocage en rotation (32) s'appuie sur le bras d'essuyage (10) dans un état accouplé de l'unité d'accouplement (20).

7. Dispositif de bras d'essuyage selon l'une quelconque des revendications 1 à 6, **caractérisé en ce que** l'unité de blocage en rotation (30) est reliée au moins partiellement d'un seul tenant avec l'unité d'accouplement (20).

8. Dispositif de bras d'essuyage selon l'une quelconque des revendications précédentes, **caractérisé en ce que** l'unité de support de tuyau (12) comprend au moins un élément de fixation (34), qui est prévu pour fixer l'unité de support de tuyau (12) au bras d'essuyage (10), et qui est relié d'un seul tenant avec le guide de tuyau (14).

9. Essuyeur (36), notamment essuie-glace, muni d'au moins un dispositif de bras d'essuyage selon l'une quelconque des revendications 1 à 8.
